# EUROPEAN PATENT APPLICATION

(11) **EP 1 582 912 A1**
(43) Date of publication of application: **05.10.2005**
(21) Application number: 03774009.9
(22) Date of filing: 13.11.2003
(51) Int. Cl.: G02F 1/1335

(54) **LIQUID CRYSTAL DISPLAY UNIT**

(30) Priority: 15.11.2002 JP 2002332044
(71) Applicant: SEIKO INSTRUMENTS INC., Chiba 261-8507 (JP)
(72) Inventor: IGARASHI, Katsuyuki, SEIKO INSTRUMENTS INC., Chiba-shi, Chiba 261-8507 (JP); FUKUCHI, Takakazu, SEIKO INSTRUMENTS INC., Chiba-shi, Chiba 261-8507 (JP)
(74) Representative: Sturt, Clifford Mark
(86) International application number: PCT/JP2003/014424
(87) International publication number: WO 2004/046801

(57) **Abstract**

To brighten a screen of a liquid crystal display device in the case of reflection type display and increase the planarity of a color filter substrate surface to improve a display quality. The liquid crystal display device according to the present invention includes a reflective film formed between a colored layer of a color filter and a liquid crystal layer to thereby prevent an incident light in the case of reflection type display from passing through the colored layer. A color display is available in the case of transmission type display, and a black-and-white display is available in the case of reflection type display; an image formed with light not passing through the colored layer is viewed in the case of reflection type display to thereby ensure a brightness in the case of reflection type display. In addition, the reflective film can be formed to be thin and therefore the planarity of the color filter substrate surface can be improved.

## Description

### TECHNICAL FIELD

The present invention relates to a liquid crystal display device capable of both reflection type display utilizing outside light which is light in the circumstance where the liquid crystal display device is used and transmission type display utilizing illuminating light such as a backlight. Liquid crystal display elements used in a liquid crystal display device are display elements which are not of a light emitting type, and are characterized by their thinness and low power consumption. Therefore, such a liquid crystal display device is widely used in electronic equipment, for example, a clock, office automation equipment such as a word processor and a personal computer, portable equipment such as electronic organizers and mobile phones, and audiovisual equipment.

### BACKGROUND ART

In recent years, in order to enable display both in a bright place and in a dark place, a liquid crystal display device has been desired that can be viewed in two display modes: reflection type display utilizing outside light which is natural light, indoor light, or the like; and transmission type display utilizing illuminating light from a backlight. Conventionally, as such a color liquid crystal display device of a transmission/reflection type, a configuration has been known where a colored layer is provided on a reflective film with a hole formed therein (see, for example, JP 11-052366 A). When the transmission type display is viewed with such a configuration, illuminating light which passes through hole portions having no reflective film (transmission regions) reaches the viewer. Here, since the illuminating light from a backlight passes through the colored layer only once, relatively bright display is obtained. On the other hand, when the reflection type display is viewed with such a configuration, outside light which is reflected by the reflective film portions (reflective regions) reaches the viewer. Here, light which once passes through the colored layer is reflected by the reflective film and then passes through the colored layer once again. In other words, the light twice passes through the colored layer having a low transmittance, and thus, the display is darker.

Hence, in order to improve the dark display screen in the case of reflection type display, a configuration is disclosed where a colored layer in reflective regions is partly removed to secure portions where light does not pass through the colored layer (see, for example, JP 2000-111902 A). In this configuration, since the colored layer is not formed in some of the reflective regions, loss of light due to the colored layer is eliminated. Therefore, light incident on the portions having no colored layer returns, after being reflected by a reflective film, to the side of a viewer with almost no loss, and an effect that the reflection type displaybecomes brighter is obtained.

In a conventional transmission/reflection type color liquid crystal display device, since, As described above, a configuration is usedwhere a hole is formed in a colored layer to expose a reflective film to ensure the brightness of the reflection type display, there causes a step corresponding to a colored layer thickness between a region with a colored layer and a region without a colored layer. Generally, in a liquid crystal display device, in order to planarize the surface of a color filter substrate, a process of forming a planarizing film through coating is provided after the colored layer is formed. However, since the colored layer is typically as thick as about 1 µm, it is difficult to obtain a highly planarized surface even if the process of forming a planarizing film through coating is provided, and a step (irregularities) of about 0.2 µm remains.

When there is a step on the surface of a color filter substrate in this way, there arises a difference in a gap to a counter substrate depending on the location. The difference in the gap leads to an orientation difference of liquid crystal molecules filled in the gap, which in turn leads to degradation of display quality such as low contrast. This step is a factor of degradation of display quality in, particularly, a color display device using STN liquid crystal.

Accordingly, an object of the present invention is to provide a liquid crystal display device capable of bright reflection type display without unevenness in display and with high display quality.

### DISCLOSURE OF THE INVENTION

Accordingly, a liquid crystal display device according to an aspect of the present invention includes a reflective film having an area smaller than that of the colored layer which is formed between a colored layer forming a color filter and a liquid crystal layer. A liquid crystal display device according to another aspect of the present invention includes a color filter substrate having a color filter formed thereon, a counter substrate which opposes to the color filter substrate via a liquid crystal layer, and a reflective film provided on a colored layer forming the color filter, the reflective film having an area smaller than that of the colored layer. With such a configuration, color display is obtained in the case of transmission type display while black-and-white display is obtained in the case of reflection type display, and, since an image formed with light which does not pass through the colored layer is viewed in the case of reflection type display, the brightness in the case of reflection type display is improved compared with a conventional case.

Further, in order to improve the adherence between the colored layer and the reflective film, a transparent insulating film is formed between the colored layer and the reflective film.

A liquid crystal display device according to still another aspect of the present invention includes a color filter substrate having a color filter formed thereon, a planarizing film formed on the color filter, a reflective film formed on the planarizing film, the reflective film having an area smaller than that of a colored layer forming the color filter, and a counter substrate which opposes to the color filter substrate via a liquid crystal layer.

Since, in the above-described configuration, it is easy to make the reflective film as thin as 0.1 to 0.2 µm, the planarity of the surface of the color filter substrate can be improved.

### BRIEF DESCRIPTION OF THE DRAWINGS

Fig. 1 schematically shows an overview of a configuration of a liquid crystal device according to the present invention, and
Fig. 2 schematically shows a configuration of another liquid crystal device according to the present invention.

### BEST MODE FOR CARRYING OUT THE INVENTION

Embodiments of the present invention are described in the following.

A liquid crystal display device according to the present invention is configured to provide a colored layer in transmission regions and not to provide a colored layer on a reflective film which is reflective regions. In order to achieve this, a reflective film having an area smaller than that of the colored layer is formed between the colored layer forming a color filter and a liquid crystal layer. More specifically, in a liquid crystal display device where a color filter substrate having the color filter formed thereon and a counter substrate are opposed to each other via the liquid crystal layer, the reflective film having an area smaller than that of the colored layer is formed on the colored layer forming the color filter.

With such a configuration, color display is obtained in the case of transmission type display, while black-and-white display is obtained in the case of reflection type display, and, since an image formed with light which does not pass through the colored layer is viewed in the case of reflection type display, the brightness of the reflection type display is ensured. Here, as a reflective film 4, a metal film containing Al or Ag may be used, and its thickness is preferably about 1000 to 2000 Å. If the thickness is too small, the amount of light whichpasses through the reflective film increases to decreases the reflectivity, and therefore, a film thickness of 1000 Å or more is preferable. If the thickness is too large, the planarity of the surface is impaired, and thus, a film thickness of 2000 or less is preferable. Further, in order to improve the adherence between the colored layer and the reflective film, a transparent insulating film may be formed between the colored layer and the reflective film. As the transparent insulating film, SiO₂, TiO₂, or the like may be used.

Further, surface irregularities (planarity), which conventionally depend on the thickness of the colored layer of about 1 µm, now depend on the thickness of the reflective film above the colored layer which can be formed to be as thin as about 0.1 to 0.2 µm, thus improving the planarity of the surface of the color filter substrate.

The reflective film is formed in an arbitrary shape at suitable places on the surface of the colored layer. Here, the shape of the reflective film need not be the same among pixels.

Further, the place where the reflective film is formed may be other than the surface of the colored layer. For example, the configuration includes a color filter substrate having a color filter formed thereon, a planarizing film formed on the color filter, a reflective film formed on the planarizing film and having an area smaller than that of a colored layer forming the color filter, and a counter substrate which opposes to the color filter substrate via a liquid crystal layer.

A liquid crystal display device according to the present invention can be manufactured by, after forming the colored layer using a common method of manufacturing a color filter substrate, forming the reflective film in an arbitrary shape at suitable places on the surface of the colored layer. After that, in order to planarize the surface of the color filter substrate, the planarizing film is formed. Here, since the reflective film can be formed to be thin, a high surface planarity can be easily achieved by a process of applying the planarizing film.

Alternatively, a liquid crystal display device according to the present invention can also be manufactured by, after a common method of manufacturing a color filter substrate is used to form the planarizing film, forming the reflective film in an arbitrary shape at suitable places on the surface of the planarizing film. Since the reflective film can be formed to be thin, a high surface planarity can be maintained without forming another planarizing film.

In this way, in any case, a liquid crystal display device according to the present invention can be manufactured without increasing the number of process steps compared with a common method of manufacturing a reflection or semi-transmission type liquid crystal display device.

Embodiments of the present invention are described in the following with reference to the drawings.

### (Embodiment 1)

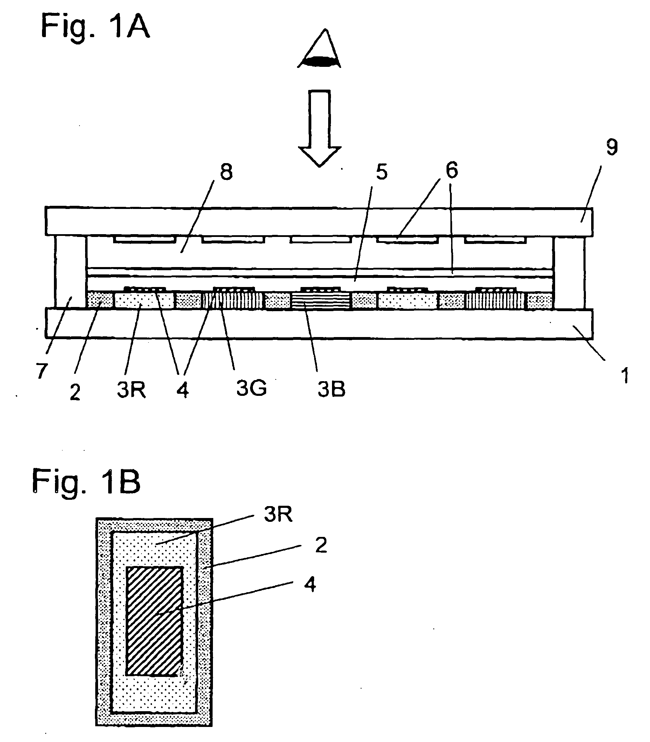

Fig. 1 schematically illustrates liquid crystal display elements used in a liquid crystal display device of this embodiment. In this embodiment, a case of a passive color liquid crystal display device is described. Fig. 1 (A) is a view illustrating a structure in section of this embodiment . As illustrated in the figure, a color filter substrate 1 and a transparent substrate 9 are opposed to each other via a liquid crystal layer 8. A transparent electrode 6 having a desired pattern is provided on one surface of each of the substrates. The color filter substrate is configured to have on a glass substrate a colored layer forming a color filter. More specifically, a light shielding film (blackmatrix) 2 having a desired pattern and colored layers of red (3R), green (3G), and blue (3B) which are the primary colors of light are formed on the surface of the color filter substrate with a thickness of about 1 µm. A reflective film 4 is formed on portions of the surfaces of the colored layers. In this way, since the reflective film 4 is formed on the surface of the colored layers (on the side of a viewer), in the case of reflection type display, light incident on reflective regions is reflected to the front face of a display portion without passing through the colored layers, and forms an image to be viewed as black-and-white display. Here, since light which is conventionally absorbed in the colored layers (3R, 3G, and 3B) returns to the side of the viewer as it is, bright display is obtained. On the other hand, in the case of transmission type display, since incident light from the side opposite to a viewing direction passes through the colored layers where the reflective film 4 is not formed and reaches a viewer, color display is obtained.

Fig. 1(B) is a schematic view seen from the direction for viewing a liquid crystal display element for one pixel illustrated in Fig. 1(A). Here, one pixel for red is enlarged and illustrated. In the figure, a place designated as the colored layer 3R is a transmission region, and a place where the reflective film 4 is formed is a reflective region. In this embodiment, the colored layer is configured to be 100 µm x 300 µm, and the reflective layer is formed thereon having an area which is 10% or more and 50% or less of an area of the colored layer. By varying the area of the reflective film 4, the color density in the case of transmission type display and the brightness in the case of reflection type display can be adjusted. In order to achieve both the color display characteristics in the case of transmission type display and the black-and-white display characteristics in the case of reflection type display, it is desirable that the area of the reflective layer is 10% or more and 50% or less of the area of the colored layer. More specifically, according to the present invention, since light to be viewed does not pass through the colored layer in the reflection mode, even if the area of the reflective film is smaller than in a conventional case, a high reflectivity (the ratio of light reflected by the LCD to the light incident on the LCD) is obtained, and, as the area of the reflective film is small, the amount of light which passes through the colored layer in the transmission mode becomes large. Therefore, if the area of the reflective film is 10% or more of the area of the colored layer, satisfactory reflection characteristics are obtained. If the area of the reflective film is smaller, satisfactory brightness can not be obtained in the case of reflection type display, which is not preferable. On the other hand, if the area of the reflective film is larger, although the brightness in the case of reflection type display is improved, when the liquid crystal display device is viewed in the transmission mode (color display) in an environment where outside light comes from the side of the viewer, the outside light is reflected by the reflective film to reach the viewer and adversely affects the displayed colors. Therefore, it is preferable that the area of the reflective film is 50% or less of the area of the colored layer.

Further, although, in this embodiment, respective colored layers are formed in the same size as that of pixels formed of electrodes of the color filter substrate and electrodes of the counter substrate, there is substantially no problem even if the size differs to a certain extent. Accordingly, if the size of a pixel and the size of the colored layer are the same, it can be expressed that the area of the reflective film is 10% or more and 50% or less of the size of a pixel electrode.

Further, although, in Fig. 1(b), the reflective film is formed at a place which corresponds to a substantially center portion of the colored layer, the location of the reflective film on the colored layer, that is, it can be arbitrarily determined which portion of the colored layer the reflective film is to be formed on.

In this embodiment, an Al-Nd film at the thickness of 1500 Å is used as the reflective film. In addition, in order to improve the adherence between the colored layers (3R, 3G, and 3B) and the reflective film 4, a transparent insulating film made of SiO₂, TiO₂, or the like may be formed to have a thickness of 150 to 200 Å between the colored layer and the reflective film.

Then, a planarizing film 5 is formed to cover the color filter substrate, and the transparent electrode 6 for applying voltage to the liquid crystal layer is provided thereon. Since the transparent electrode is formed on the surface of the planarizing film, it is necessary that the planarizing film is both planar and insulative. The planarizing film is formed to have a thickness of about 2 µm. Since the metal film 4 is formed to be very thin, it is easy to achieve a high planarity.

Next, a method of manufacturing the liquid crystal display device according to the present invention is described. First, the colored layer forming the color filter is formed on the glass substrate. More specifically, the light shielding film (black matrix) 2 having the desired pattern and colored layers of red, green, and blue which are the primary colors of light (3R, 3G, and 3B) are formed on the surface of the color filter substrate with a thickness of about 1 µm. They are all formed by a manufacturing method called pigment disperse using photolithography.

After that, the reflective film 4 in an arbitrary shape is formed to have an appropriate area on the surface of the colored layers (3R, 3G, and 3B). A metal film containing Al or Ag is generally used as the reflective film 4. Such a metal film is formed to have a thickness of about 1000 to 1500 Å by sputtering or the like. In order to improve the adherence between the colored layer and the reflective film 4, a transparent insulating film made of SiO₂, TiO₂, or the like may be formed between the colored layer and the reflective film. Since the transparent insulating film can be formed in succession to the reflective film 4, it is not necessary to increase the number of process steps to, for example, move a workpiece or change a chamber.

Next, in order to planarize the surfaces of the black matrix 2, the colored layers (3R, 3G, and 3B), and the reflective film 4, the planarizing film 5 is formed to have a thickness of about 2 µm through coating. As described above, since the metal film can be formed to be very thin, it is easy to achieve a high planarity of the planarizing film.

Then, the transparent electrode 6 is formed on the planarizing film 5. The transparent electrode 6 can be patterned as desired by photolithography. The transparent electrode 6 is a transparent conductive film called ITO formed by oxidizing indium (In) containing tin (Sn) as an impurity, and its resistance can be set as desired. Since ITO is a semiconductor material of low resistance, the most versatile level of the resistance is 10 Ω/□ to 100 Ω/□ as sheet resistance. Typically, ITO is formed by vacuum film forming such as sputtering and vapor deposition. A transparent electrode is also formed on the opposing glass substrate 9 in a similar manner.

After that, spacers for setting the cell gap to a target value are dispersed, and then, orientation films are provided on the surfaces of the color filter substrate 1 and the opposing glass substrate 9 for orienting the liquid crystal 8. Then, a seal material 7 is applied on either the color filter substrate 1 or the opposing glass substrate 9, and the two substrates are bonded with each other to form a cell structure. Generally, a thermosetting resin is used as the seal material 7, and thermocompression bonding is utilized. After that, by filling the cell gap with the liquid crystal, a liquid crystal display element is obtained.

### (Embodiment 2)

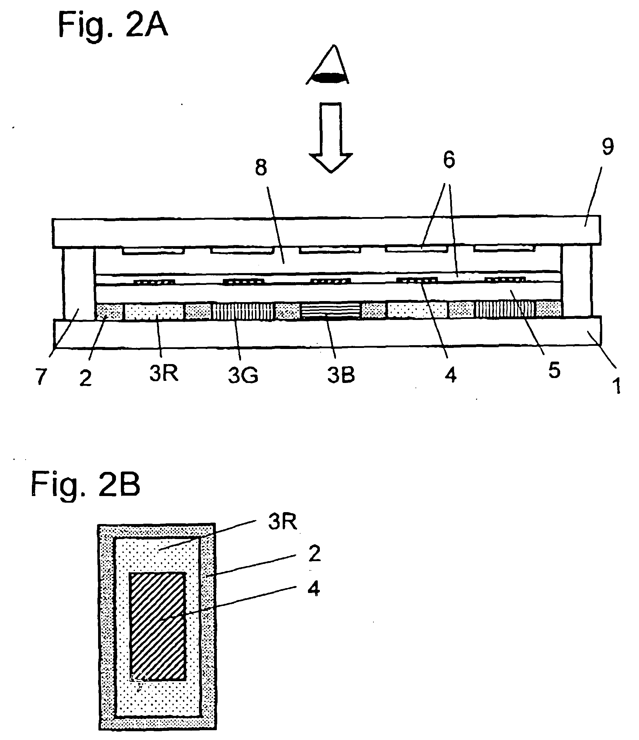

Fig. 2 schematically illustrates liquid crystal display elements used in a liquid crystal display device of this embodiment. This embodiment differs from Embodiment 1 in that the reflective film 4 is provided on the planarizing film 5. Description of portions the same as those of Embodiment 1 is omitted as appropriate. Fig. 2(A) is a view illustrating a structure in section of the liquid crystal display elements of this embodiment. Fig. 2 (B) is a schematic view seen from the direction for viewing a display element for one pixel illustrated in Fig. 2 (A) . Here, one pixel for red is enlarged and illustrated. More specifically, a color filter substrate 1 has a structure in which a light shielding film (black matrix) 2 and a color filter formed of colored layers (3R, 3G, and 3B) are formed on a glass substrate. Typically, the color filter is provided at the thickness of about 1 µm. The planarizing film 5 is provided on the color filter and the reflective film 4 is provided on the planarizing film 5. If necessary, a transparent insulating film is formed on the planarizing film 5, and the reflective film 4 is formed thereon. Here, the reflective film 4 is formed to correspond to the positions of the colored layers (3R, 3G, and 3B) . Fig. 2 (B) shows an example where the reflective film 4 is formed at a place which corresponds to a center portion of the colored layer. Therefore, similarly to the case of Embodiment 1, light incident on reflective regions where the reflective film is formed is reflected to the front face of a display portion without passing through the colored layers, and returns to the side of a viewer without being absorbed in the colored layers, and thus, bright display is obtained. In other words, bright display can be achieved when viewed in the reflection mode.

A transparent electrode for applying voltage to a liquid crystal layer is formed on the color filter substrate where the reflective film is formed. If a higher planarity is desired, another planarizing film may be formed on the reflective film to form the transparent electrode thereon.

As described above, according to a liquid crystal display device of the present invention, since incident light does not pass through colored layers (3R, 3G, and 3B) in the case of reflection type display, bright display can be obtained.

Further, since the reflective film 4 can be formed to be very thin, i.e. , as thin as 100 to 2000 Å, a high planarity can be obtained when a planarizing film is applied later. Even if the planarizing film is not applied later, since the thickness of the reflective film itself is small, the irregularities of the surface remain small, which makes it possible to prevent degradation of display quality.

### INDUSTRIAL APPLICABILITY

As described above, a transmission/reflection type liquid crystal display device according to the present invention is capable of bright reflection type display and suitable for achieving high display quality without unevenness in display.

## Claims

1. A liquid crystal display device, comprising:
a color filter substrate having a color filter formed thereon; and
a counter substrate opposing to the color filter substrate via a liquid crystal layer,
**characterized in that** a reflective film is formed between a colored layer serving as the color filter and the liquid crystal layer to have an area smaller than an area of the colored layer.

2. A liquid crystal display device according to claim 1, **characterized in that** the reflective film is formed on the colored layer.

3. A liquid crystal display device according to claim 2, **characterized in that** a transparent insulating film is formed between the colored layer and the reflective film.

4. A liquid crystal display device according to claim 3, **characterized in that** the reflective film is a metal reflective film, and the transparent insulating film is a silicon oxide or a titanium oxide.

5. A liquid crystal display device according to claim 4, **characterized in that** the metal reflective film comprises aluminum or silver.

6. A liquid crystal display device according to any one of claims 2 to 5, **characterized in that** a planarizing film is formed to cover the reflective film.

7. A liquid crystal display device according to claim 1, **characterized in that** a planarizing film is formed on the color filter, and the reflective film is formed on the planarizing film.

8. A liquid crystal display device according to any one of claims 1 to 7, **characterized in that** an area of the reflective film is 10% to 50% of an area of the colored layer.

9. A liquid crystal display device according to any one of claims 1 to 7, **characterized in that** an area of the reflective film is 10% to 50% of an area of a pixel electrode including: a transparent electrode formed on the filter substrate; and an opposite electrode formed on the counter substrate.

10. A liquid crystal display device according to any one of claims 1 to 9, **characterized in that** the reflective film has a thickness of 0.1 to 0.2 µm.
